# NEUE EUROPÄISCHE PATENTSCHRIFT

(11) **EP 0 966 770 B2**
(45) Veröffentlichungstag und Bekanntmachung des Hinweises auf die Entscheidung über den Einspruch: **02.09.2009**
(45) Hinweis auf die Patenterteilung: 19.11.2003
(21) Anmeldenummer: 98908013.0
(22) Anmeldetag: 29.01.1998
(51) Int. Cl.: H01M 8/02, H01M 8/24

(54) **MEMBRAN-ELEKTRODENEINHEIT MIT INTEGRIERTEM DICHTRAND UND VERFAHREN ZU IHRER HERSTELLUNG**
MEMBRANE-ELECTRODE UNIT WITH AN INTEGRATED WEAR RING, AND PRODUCTION PROCESS
UNITE D'ELECTRODES-MEMBRANES A COLLERETTE D'ETANCHEITE INTEGREE, ET PROCEDE DE FABRICATION

(30) Priorität: 29.01.1997 DE 19703214
(43) Veröffentlichungstag der Anmeldung: 29.12.1999
(73) Patentinhaber: Proton Motor Fuel Cell GmbH, 82319 Starnberg (DE)
(72) Erfinder: KOSCHANY, Arthur, D-82343 Pöcking (DE); SCHWESINGER, Thomas, D-94356 Kirchroth (DE)
(74) Vertreter: Klunker . Schmitt-Nilson . Hirsch
(86) Internationale Anmeldenummer: PCT/EP1998/000479
(87) Internationale Veröffentlichungsnummer: WO 1998/033225

(56) Entgegenhaltungen:
- EP-A- 0 504 752
- EP-A- 0 604 683
- EP-A- 0 690 519
- GB-A- 2 236 012
- JP- - 08 045 517
- JP- - 08 078 028
- US- - 5 176 966
- US- - 5 187 025
- PATENT ABSTRACTS OF JAPAN vol. 013, no. 254 (E-772), 13.Juni 1989 & JP 01 052383 A (FUJI ELECTRIC CO LTD), 28.Februar 1989,
- BLACKMER AND PHILLIPS: 'Ion-exchange membrane fuel cell developed for space vehicles' ASE JOURNAL Bd. 70, Nr. 1, Januar 1962, Seiten 82 - 86
- 'Fahren ohne Emissionen' DAIMLER-BENZ HIGH TECH REPORT TECHNOLOGIE 1996, STUTTGART, Seiten 14 - 19

## Beschreibung

Die vorliegende Erfindung betrifft eine Membran-Elektrodeneinheit für eine Polymerelektrolytmembran-Brennstoffzelle mit einer Polymerelektrolytmembran, einer an einer Oberfläche der Membran angeordneten Anode und einer an der anderen Oberfläche der Membran angeordneten Kathode, sowie ein Verfahren zur Herstellung der Membran-Elektrodeneinheit.

Polymerelektrolytmembran-Brennstoffzellen, wie sie üblicherweise zur Erzeugung von elektrischem Strom verwendet werden, enthalten eine Anode, eine Kathode und eine dazwischen angeordnete Ionenaustauschermembran. Eine Mehrzahl von Brennstoffzellen bildet einen Brennstoffzellenstapel, wobei die einzelnen Brennstoffzellen durch als Stromsammler wirkende bipolare Platten voneinander getrennt werden. Die anodenseitige bipolare Platte einer Zelle ist dabei gleichzeitig die kathodenseitige bipolare Platte der Nachbarzelle. Zur Erzeugung von Elektrizität wird ein Brenngas, z.B. Wasserstoff, in den Anodenbereich und ein Oxidationsmittel, z.B. Luft oder Sauerstoff, in den Kathodenbereich eingebracht. Anode und Kathode enthalten in den mit der Polymerelektrolytmembran in Kontakt stehenden Bereichen jeweils eine Katalysatorschicht. In der Anodenkatalysatorschicht wird der Brennstoff unter Bildung von Kationen und freien Elektronen oxidiert, in der Kathodenkatalysatorschicht wird das Oxidationsmittel durch Aufnahme von Elektronen reduziert. Alternativ können die beiden Katalysatorschichten auch an den entgegengesetzten Seiten der Membran aufgebracht werden. Die Struktur aus Anode, Membran, Kathode und den entsprechenden Katalysatorschichten wird als Membran-Elektrodeneinheit bezeichnet. Die anodenseitig gebildeten Kationen wandern durch die Ionenaustauschermembran zur Kathode und reagieren mit dem reduzierten Oxidationsmittel, wobei, wenn Wasserstoff als Brenngas und Sauerstoff als Oxidationsmittel verwendet werden, Wasser entsteht. Die bei der Reaktion von Brenngas und Oxidationsmittel entstehende Wärme wird mittels Kühlung abgeführt. Zur besseren Verteilung der Reaktionsgase sowie gegebenenfalls zur Stützung der Membranelektrodeneinheit können zwischen Elektroden und bipolaren Platten Gasführungsstrukturen, z.B. Gitternetze, vorgesehen werden.

Nach dem Einbau in eine Brennstoffzelle steht die Membran-Elektrodeneinheit anodenseitig mit dem Brenngas und kathodenseitig mit dem Oxidationsmittel in Kontakt. Die Polymerelektrolytmembran trennt die Bereiche, in denen sich Brenngas bzw. Oxidationsmittel befindet, voneinander. Um zu verhindern, daß Brenngas und Oxidationsmittel direkt miteinander in Kontakt kommen können, was explosionsartige Reaktionen hervorrufen könnte, muß eine verlässliche Abdichtung der Gasräume voneinander gewährleistet sein. Hierbei stellt insbesondere die Abdichtung gegen das Brenngas Wasserstoff, das hervorragende Diffusionseigenschaften besitzt, ein Problem dar.

Um zu verhindern, daß in der Brennstoffzelle entlang den Rändern der Membran ein Gasaustausch stattfinden kann, geht man herkömmlicherweise folgendermaßen vor: bei der Herstellung herkömmlicher Membran-Elektrodeneinheiten werden die Abmessungen für Membran und Elektroden so gewählt, daß bei dem sandwichartigen Anordnen der Membran zwischen den Elektroden die Membran an jeder Seite ein gutes Stück über die Fläche der Elektroden hinausragt. Die herkömmliche Membran-Elektrodeneinheit weist also eine Membran auf, deren Randbereiche nicht von Elektrodenmaterial bedeckt sind. Um den Umfang der Membran-Elektrodeneinheit werden auf beiden Seiten der Membran flache Dichtungen, z.B. aus gerecktem PTFE, angebracht, die die überstehenden Bereiche der Membran bedecken. Bei einer quadratischen Membran-Elektrodeneinheit beispielsweise werden beidseitig der Membran quadratische Rahmen dergestalt aufgepreßt und/oder verklebt, daß sie die überstehenden Bereiche der Membran mindestens zum Teil bedecken. Diese herkömmlichen Membran-Elektrodeneinheiten haben zum einen den Nachteil, daß sie recht aufwendig in ihrer Herstellung sind, da Anode, Kathode und Membran jeweils separat zugeschnitten werden und anschließend für jede einzelne Membran-Elektrodeneinheit paßgenau zusammengesetzt werden müssen. Eine preisgünstige Herstellung von Membran-Elektrodeneinheiten als Quadratmeterware ist nicht möglich. Ebenso müssen die Dichtungen separat zugeschnitten und dann paßgenau angebracht werden.

Ein weiterer Nachteil der herkömmlichen Membran-Elektrodeneinheiten zeigt sich beim Einbau in eine Brennstoffzelle. In der Brennstoffzelle. muß mindestens auf der Anodenseite zwischen Membran-Elektrodeneinheit und der die Zelle begrenzenden Bipolarplatte ein gasdichter Raum ausgebildet werden. Üblicherweise wird hier mit Dichtungsringen oder -Streifen zwischen Membran-Elektrodeneinheit und bipolarer Platte gearbeitet, wobei jeweils mehrere Zellen in Reihe zusammengespannt werden und eine gemeinsame Brenngaszufuhr erhalten. Erst beim Zusammenspannen werden die gasdichten Räume ausgebildet. Tritt ein Leck auf, ist dieses schwer lokalisierbar, und es kann auch nicht eine Zelle allein, sondern nur die zusammengespannte Einheit, in der das Leck auftritt, entfernt werden. Dies ist mit erheblichem Arbeitsaufwand und Ausfall an Brennstoffzellen-Nutzungsdauer verbunden.

Gelegentlich wird darauf verzichtet, die Membran-Elektrodeneinheit mit einem aufgepreßten Dichtrahmen zu versehen. Das Abdichten geschieht dann beim Einbau in eine Brennstoffzelle, indem zwischen dem nicht von Elektrodenmaterial bedeckten Teil der Membran und der angrenzenden Bipolarplatte ein Dichtring mit eingespannt wird. In beiden Fällen ergibt sich hierbei ein Spalt zwischen Elektrodenmaterial und Dichtung, was die Anordnung empfindlich gegenüber mechanischen Verletzungen macht, insbesondere bei dünnen oder spröden Membranen. Außerdem besteht die Gefahr, daß die Membran-Elektrodeneinheit nicht völlig eben eingespannt wird, so daß die Membran mit dem metallischen Stromableiter in Kontakt kommt. Dabei kann das Metall von einer sauren Membran teilweise gelöst werden. Die Metallionen treten in die Membran ein, wodurch deren Leitfähigkeit leidet.

EP-A-0 504 752 offenbart eine integrale Separatorplatte, bestehend aus der eigentlichen Separatorplatte, einer Anode, die an einer Seite der Separatorplatte angeordnet ist, einer Kathode, die an der anderen Seite der Separatorplatte angeordnet ist, und zwischen Anode und Separatorplatte bzw. zwischen Kathode und Separatorplatte angeordneten Materiallagen, die gegen den verwendeten flüssigen Elektrolyten chemisch beständig und für diesen Elektrolyten undurchlässig sind, so daß er nicht in die Separatorplatte eindringen kann. Die Herstellung der integralen Separatorplatte erfolgt unter Pressen der Anordnung aus Separatorplatte, Elektroden und elektrolytundurchlässigen Schichten, so daß das Material der elektrolytundurchlässigen Schichten zum Teil in die Poren der Elektroden hineingepreßt wird und zum Teil seitlich aus der Anordnung herausgepreßt wird. Diese Elektrolyt-Sperre verhindert, daß der Elektrolyt von einer Brennstoffzelle in die nächste übertritt.

EP-A-0 690 519 offenbart Abdichtungen für Festpolymerelektrolyt-Membranen bestehend aus einem porösen PTFE-Film, auf den ein Festpolymerelektrolyt (Ionenaustauscherpolymer) dergestalt aufgebracht wird, daß er zum Teil in den PTFE-Film eindringt, aber nicht durch ihn hindurchdringt. Das Dichtungsmaterial wird in Stücke passender Größe geschnitten und an der Festpolymerelektrolytmembran angebracht, wobei die Festpolymerelektrolyt-Oberflächen zueinander weisen.

EP-A-0 604 683 offenbart eine Membran-Elektrodeneinheit, bei der im wesentlichen die gesamte Oberfläche der Membran von porösem elektrisch leitfähigen Flachmaterial, d.h. den Elektroden, bedeckt ist. Diese Membran-Elektrodeneinheit kann Öffnungen für den Durchlaß von Fluiden besitzen. Die Abdichtung an den Öffnungen oder am Umfang der Membran-Elektrodeneinheit erfolgt durch Einbringen eines Dichtmittels wie Silikonkautschuk in die Schichten der Elektroden.

Patent Abstracts of Japan, Vol. 13, Nr. 254 (E-772) offenbart gasdichtes Abdichten eines porösen Elektrodensubstrats durch Anbringen L-förmiger Harzfilme an den Ecken des Substrats, und Anbringen U-förmiger Harzfilme über den L-förmigen Filmen und parallel zu den Gaswegen in dem Substrat, und Verbinden der Filme durch Hitze.

GB-A-2 236 012 offenbart Randabdichtungen für Phosphorsäure-Brennstoffzellen. Anode, Kathode und Matrix werden an den Rändern mit einem Elastomer imprägniert. Wenn die Anode, Kathode und Matrix in einer Brennstoffzelle unter Druck zusammengespannt werden, dichten die Elastomer enthaltenden Bereiche die Brennstoffzelle ab, wobei guter elektrischer Kontakt zu den bipolaren Platten gewährleistet wird.

WO92/22096 offenbart Polymerelektrolytmembran-Brennstoffzellen, bei denen Membranmaterial eingespart wird, indem am Außenumfang der Membran Dichtmaterial angebracht wird, das die Anordnung aus Membranelektrodeneinheit und Separatorplatte nach außen abdichtet. Dazu werden zwei Lagen Dichtmaterial zwischen Anode und Membran bzw. Kathode und Membran so angebracht, daß sich nur kleine Bereiche von Dichtmaterial und Elektrode/Membran überlappen, während der größte Teil des Dichtmaterials einen mit Membran und Elektroden fest verbundenen Dichtring ausbildet. Alternativ wird nur eine Lage Dichtmaterial mit einer am Randbereich stufenförmigen Anordnung aus Elektroden und Membran verbunden.

DE 24 46 715 offenbart Hydrazin-Brennstoffelemente mit einer Kunststoffabdichtung am Rand, wobei die Membranen an der Strinseite mit einem Kunststoffrahmen verklebt sind.

DE 1 596 016 offenbart Hohlelektroden für Brennstoffelemente mit zwei porösen Platten und einem T-förmigen Dichtungsring am Außenumfang der porösen Platten. Die Dichtung kann durch Einspritzen von verflüssigtem Kunststoff erfolgen, was die Haftung zwischen Platten und Dichtung verbessert. Der Dichtungsring zwischen den Platten dient zur Ausbildung einer gasdichten Kammer zwischen den porösen Platten.

US-A-5 264 299 offenbart Membranelektrodeneinheiten, die von Trägerplatten mit Katalysatorauflage bedeckt sind. Die Trägerplatten können bündig mit der Membran enden oder seitlich über sie hinaus reichen. Es wird ein Dichtrand ausgebildet, der die Poren im Randbereich der Trägerplatten füllt, wenn die Membran bündig mit den Trägerplatten endet. Wenn die Membran nicht bis zum Außenrand der Trägerplatten reicht, füllt der Dichtrand auch den Zwischenbereich zwischen den Trägerplatten und haftet an den Stirnseiten der Membran.

US-A-5 523 175 offenbart Membranelektrodeneinheiten, bei denen die Membran vollständig von Elektrodenmaterial bedeckt ist. Unmittelbar an die Membran angrenzend befinden sich Katalysator-Trägerplatten und an diese angrenzend Verstärkungsplatten. Zur Randabdichtung der Katalysator-Trägerplatten und der Verstärkungsplatten sind deren Poren in den jeweiligen Randbereichen vollständig mit Dichtmittel gefüllt, so dass die Randbereiche nach außen und zur Membran hin abgedichtet sind. An den Stirnseiten der Membranelektrodeneinheit befindet sich kein Dichtrand.

US-A-5 187 025 offenbart eine Membran-Elektrodeneinheit für eine Polymerelektrolytmembran-Brennstoffzelle, bestehend aus Membran, Katalysatorschichten und Elektroden, wobei die Membran-Elektrodeneinheit einen Kunststoffrahmen aufweist. Der Rahmen ist ein Laminat, bestehend aus einem Membranrahmen (Membran-Abstandhalter), einem Brückenrahmen und einem Elektrodenrahmen, jeweils mit Klebstoffschichten zwischen den einzelnen Rahmenelementen. Der Zusammenbau der Komponenten erfolgt in der Weise, dass zunächst die einzelnen Komponenten in passenden Abmessungen aus den geeigneten Materialien ausgestanzt werden, dann in der richtigen Reihenfolge aufeinander gestapelt und schließlich miteinander verpresst werden. Die Elektroden und der zugehörige Elektrodenrahmen können als eine Einheit ausgebildet werden, indem der Rahmen durch Spritzgießen an die Elektrode angeformt wird. Dabei dringt auch Rahmenmaterial ein kurzes Stück in die Elektrode ein. Bei der Membran-Elektrodeneinheit haben die Elektroden eine größere flächenmäßige Ausdehnung als die Membran.

US-A-5 176 966 offenbart eine Membran-Elektrodeneinheit, bestehend aus zwei Lagen von porösem, elektrisch leitfähigem Trägermaterial mit einer dazwischen angeordneten Festpolymer-Ionenaustauschermembran. Die porösen Trägermaterialien tragen jeweils an der der Membran zugewandten Seite eine Katalysatorschicht, mit der zusammen sie Elektroden bilden. Die Trägermaterialien bedecken im Wesentlichen die gesamte Oberfläche der Membran. Der Bereich, an dem sich Katalysator befindet, ist der elektrochemisch aktive Bereich der Membran-Elektrodeneinheit. Die Membran-Elektrodeneinheit besitzt außerdem Durchführungen. Die Abdichtung des elektrochemisch aktiven Bereichs sowie der Durchführung kann auf zwei Arten erfolgen. Entweder werden an dem abzudichtenden Bereich Rillen in das Elektrodenmaterial gefrast und mit Dichtmittel gefüllt, oder das Elektrodenmaterial wird an den abzudichtenden Bereichen mit Dichtmittel imprägniert.

JP 08-045517 offenbart die gemeinsame Abdichtung eines fünfschichtigen Aufbaus aus Anoden-Stromsammler, Anoden-Katalysatorbett, Ionenaustauschermembran, Kathoden-Katalysatorbett und Kathoden-Stromsammler mittels eines Dichtmittels. Die Membran steht allseitig über das Elektrodenmaterial über.

JP 08-078028 offenbart Brennstoffzellen, die aufgebaut sind aus einem Separator, Gasdiffusionselektroden, einem Festpolymerelektrolytfilm und einer Dichtung. Die Polymerelektrolytmembran steht über die Gasdiffusionselektrode über, und zwar ebenso weit wie der Separator. Die Dichtung füllt den Spalt zwischen Separator und Polymerelektrolytmembran an der Stirnseite der Gasdiffusionselektrode.

Der Artikel "Ion exchange membrane fuel cell developed for space vehicles" von R.H. Bleckmer und G.A. Phillips, SAE Journal 1962, Seiten 82-86, offenbart Elektronensammler, die von einem spritzgegossenen Rahmen umgeben werden. Die Membran-Elektrodeneinheit wird mittels Kontaktkleber an dem Rahmen des Elektronensammlers befestigt.

Die vorliegende Erfindung erlaubt es, die Nachteile des Stands der Technik zu überwinden.

Aufgabe der Erfindung ist es, eine Membran-Elektrodeneinheit für eine Polymerelektrolytmembran-Brennstoffzelle bereitzustellen, die an mindestens einer Seite dergestalt mit einer Bipolarplatte verbunden werden kann, daß zwischen Membran und Bipolarplatte ein gasdichter Raum ausgebildet wird.

Aufgabe der Erfindung ist es außerdem, eine Membran-Elektrodeneinheit bereitzustellen, bei der die Anordnung Membran-Elektrodeneinheit/Bipolarplatte separat auf Gasdichtheit geprüft werden kann.

Aufgabe der Erfindung ist es ferner, ein einfaches, kostengünstiges Verfahren zur Herstellung derartiger Membran-Elektrodeneinheiten bereitzustellen.

Die Aufgaben werden gelöst durch die Membran-Elektrodeneinheit gemäß Anspruch 1 und das Verfahren zur Herstellung der Membran-Elektrodeneinheit gemäß Anspruch 17.

Bevorzugte Weiterbildungen der Erfindung sind in den jeweiligen Unteransprüchen angegeben.

Die erfindungsgemäße Membran-Elektrodeneinheit mit integriertem Dichtrand für eine Polymerelektrolytmembran-Brennstoffzelle mit einer Polymerelektrolytmembran, einer an einer Oberfläche der Membran angeordneten Anode und einer an der anderen Oberfläche der Membran angeordneten Kathode ist dadurch gekennzeichnet, daß die Membran-Elektrodeneinheit einen an den Stirnflächen bündigen Abschluß von Membran, Anode und Kathode aufweist, so daß die Membran an beiden Oberflächen im wesentlichen vollständig von den Elektroden bedeckt ist, und dass um den Umfang der Membran-Elektrodeneinheit ein Dichtrand vorgesehen ist,
der einen Randbereich mindestens einer der Elektroden dergestalt durchdringt, daß die Poren der mindestens einen Elektrode in dem Randbereich im wesentlichen gefüllt sind, und der an dem mit dem Randbereich in Berührung stehenden Bereich der Membran und an den Stirnflächen der Membran und der mindestens einen Elektrode haftet.

Das erfindungsgemäße Verfahren zur Herstellung einer Membran-Elektrodeneinheit mit integriertem Dichtrand für eine Polymerelektrolytmembran-Brennstoffzelle weist folgende Schritte auf:
- Bereitstellen eines Membran-Elektroden-Schichtmaterials aus Anodenmaterial, Kathodenmaterial und dazwischen angeordnetem Polymerelektrolytmembran-Material,
- Abtrennen eines Teilstücks des Schichtmaterials in der zur Herstellung der gewünschten Membran-Elektrodeneinheit geeigneten Größe, wobei das abgetrennte Teilstück einen an den Stirnflächen bündigen Abschluß von Membran, Anode und Kathode aufweist, so daß in dem abgetrennten Teilstück die Membran an beiden Oberflächen im wesentlichen vollständig von den Elektroden bedeckt ist,
- Ausbilden eines Dichtrandes um den Umfang des Teilstücks durch Eindringenlassen eines Dichtmittels in den Randbereich mindestens einer der Elektroden, wobei die Poren der mindestens einen Elektrode in dem Randbereich im wesentlichen vollständig gefüllt werden, so daß der Dichtrand einen Randbereich der mindestens einen Elektrode durchdringt und an dem mit dem Randbereich in Berührung stehenden Bereich der Membran haftet, und Anbringen des Dichtmittels an den Stirnflächen der mindestens einen Elektrode und den Stirnflächen der Membran, so daß der Dichtrand an den Stirnflächen der Membran und der mindestens einen Elektrode haftet.

Erfindungsgemäß werden zur Herstellung der Membran-Elektrodeneinheit nicht Anode, Kathode und Membran separat zugeschnitten und die einzelnen Teile dann miteinander verbunden, sondern es wird ein Schichtmaterial aus Anodenmaterial, Kathodenmaterial und dazwischenliegendem Membranmaterial hergestellt, beispielsweise mittels eines Walzverfahrens entsprechend den bei der Papierherstellung verwendeten. Dabei erhält man Quadratmeterware, aus der die einzelnen Membran-Elektrodeneinheiten in einem Arbeitsgang in der gewünschten Größe ausgeschnitten, ausgestanzt oder anderweitig abgetrennt werden können. Eine so erhaltene Membran-Elektrodeneinheit enthält, abgesehen von der Stirnfläche, keine freie Membranfläche, vielmehr wird die Membran an beiden Oberflächen vollständig von Anodenmaterial bzw. Kathodenmaterial bedeckt. Falls gewünscht, können in der Membran-Elektrodeneinheit Durchführungen ausgebildet werden, ebenfalls in einem Arbeitsgang.

Die zur Herstellung der erfindungsgemäßen Membran-Elektrodeneinheit verwendeten Membranen, Elektroden und Katalysatoren an sich können konventionelle Materialien sein, wie sie üblicherweise für entsprechende Zwecke eingesetzt werden. Als Elektroden, d.h. Anoden und Kathoden, kommen beispielsweise Diffusionselektroden aus Kohlepapier oder graphitisierten Geweben in Frage, die einen Katalysator enthalten, der parallel und auch senkrecht zur Elektrodenfläche beliebig verteilt sein kann. Anstelle von Kohlepapier oder graphitisierten Geweben können aber auch Kohlefaservliese verwendet werden. Als Katalysator kann beispielsweise Platin auf Kohlenstoff verwendet werden. Die Elektroden können nur die Katalysatorschicht, einen Teil der Diffusionsschicht oder die gesamte Diffusionsschicht enthalten. Alternativ kann der Katalysator auch auf den Oberflächen der Membran angebracht sein. Als Membranen werden vorteilhaft die üblichen ionenleitenden Polymere, beispielsweise Nafion oder ein sulfoniertes Polyetheretherketonketon (PEEKK, erhältlich von Hoechst), verwendet.

Die Membran-Elektrodeneinheiten in Form von Quadratmeterware können hergestellt werden unter Verfahrensbedingungen wie die konventionellen, einzelnen Membran-Elektrodeneinheiten. Im Falle der Erfindung werden je eine Bahn aus Elektrodenmaterial an jeder Oberfläche einer Bahn einer in ihrer H⁺-Form vorliegenden Polymerelektrolytmembran angeordnet und anschließend bevorzugt bei Drücken von etwa 3·10⁶ bis zu 5·10⁷Pa (30 bar bis zu 500 bar) und Temperaturen bis zu 250°C aufgewalzt. Typisch sind Drücke zwischen etwa 8·10⁶ und 2,5·10⁷ Pa (80 und 250 bar) und Temperaturen zwischen etwa 80 und 120° C. Wenn das Elektrodenmaterial die katalytisch aktive Schicht enthält, muß es dergestalt auf die Membran aufgewalzt werden, daß die katalytisch aktive Schicht in Kontakt mit der Membran steht.

Alternativ kann auch zuerst eine Elektrode und in einem zweiten Arbeitsgang die zweite Elektrode aufgebracht werden.

Aus diesem Membran-Elektroden-Schichtmaterial werden in einem Arbeitsgang Membran-Elektrodeneinheiten in der gewünschten Größe zugeschnitten, und zumindest um den Umfang einer jeden Membran-Elektrodeneinheit wird ein Dichtrand ausgebildet, der die Membran und die Elektrode bzw. die Elektroden gasdicht miteinander verbindet und der außerdem gasdicht mit einer Bipolarplatte verbunden werden kann. Der hierin verwendete Begriff "Membran-Elektrodeneinheit" im Sinne der Erfindung bezeichnet also Schichtmaterialstücke aus Anoden-, Kathoden- und Membranmaterial ohne oder mit Dichtrand, wobei abgesehen von der Stirnfläche im wesentlichen keine nicht von Elektrodenmaterial bedeckte Membranfläche vorhanden ist. Der Dichtrand wird hergestellt, indem man ein Dichtmittel, beispielsweise einen Kunststoff oder ein Gemisch von Kunststoffen, in Randbereiche der Elektroden am Umfang der Membran-Elektrodeneinheit eindringen läßt, so daß die Poren der Elektroden im wesentlichen gefüllt werden und kein Gas mehr durchlassen. Der Kunststoff, bevorzugt ein Thermoplast oder ein aushärtbarer, flüssiger Kunststoff von niedriger Viskosität kann durch Kapillarwirkung in die Elektroden eindringen und anschließend ausgehärtet werden, oder es kann Kunststoff in flüssiger Form, d.h. geschmolzen, unausgehärtet oder in einem Lösungsmittel gelöst, mit der Elektrode, gegebenenfalls durch Anwendung des erforderlichen Drucks (bevorzugt bis etwa 2·10⁷ Pa (200 bar)) und/oder erhöhter Temperatur in einer geeigneten Vorrichtung verpreßt werden, und die Poren der Elektrode auf diese Weise gefüllt werden. Gegebenenfalls kann vorher evakuiert werden, um Luft aus den Poren zu entfernen und so das Eindringen des Dichtmittels zu erleichtern. Bevorzugte Kunststoffe sind Polyethylene, Polypropylene und Polyamide sowie Epoxidharze, Silicone und Polyesterharze. Zwecks besserer Benetzung der von Kunststoff zu durchdringenden Randbereiche der Elektroden können diese vor der Behandlung mit Kunststoff mit einem Lösungsmittel für den Kunststoff benetzt oder an der Oberfläche angefräst werden. Auch ein teilweises Oxidieren der entsprechenden Bereiche der Kohlenstoffmaterialien der Elektroden kann vorteilhaft sein.

Der so um den Umfang der Membran-Elektrodeneinheit ausgebildete Dichtrand verhindert ein Austreten von Reaktionsgasen aus den Elektroden "radial" nach außen durch "Verstopfen" der Gaswege im Randbereich der Elektroden und sorgt außerdem für eine gasdichte Verklebung und Anhaftung des Randbereichs der Elektroden mit dem angrenzenden Membranbereich.

Derartige Dichtungen können in allen Bereichen der Membran-Elektrodeneinheit ausgebildet werden, in denen Ränder auftreten, z.B. auch bei Durchführungen durch die aktiven Flächenbereiche der Membran-Elektrodeneinheit, wie sie häufig nötig sind zur Zuleitung von Gasen, Wasser oder für Spannschrauben. Alternativ können Durchführungen auch ganz oder teilweise mit einem Dichtrahmen ausgekleidet werden.

Außerden wird ein Dichtrahmen am Außenumfang der Membranelektrodeneinheit als zusätzlicher Dichtrand vorgesehen, der um den Umfang der Membranelektrodeneinheit an deren im wesentlichen bündig abschließenden Stirnseiten angebracht wird.

Als Material für den Dichtrahmen kommen bevorzugt Kunststoffe oder Kunststoffgemische in Frage, insbesondere Thermoplaste wie Polyethylene, Polypropylene und Polyamide, oder aushärtbare Kunststoffe wie Epoxidharze, Silicone oder Polyesterharze. Der Dichtrahmen wird so angebracht, daß er sich fest mit den Stirnflächen der Membran und den Stirnflächen von mindestens einer Elektrode verbindet und gasdicht an ihnen haftet.

Die erfoderlichen Durchführungen können auch unmittelbar im Dichtrand selbst vorgesehen werden.

Der erfindungsgemäße Dichtrand ist also eine Mischform zwischen zwei Dichtrandvarianten, d.h. er ist teilweise innerhalb des Elektrodenmaterials und teilweise an den Stirnseiten ausgebildet.

Die am Umfang und ggf. an Durchführungen abgedichteten Membran-Elektrodeneinheiten können nun mit bipolaren Platten verbunden werden. In der Regel dürfen bipolare Platten nicht direkt auf den Elektroden aufliegen, sondern es muß zwischen Elektrode und bipolarer Platte ein freier Raum verbleiben, in dem eine Gasführungsstruktur, z.B. ein Netz, zur besseren Verteilung von Reaktionsgasen über die Oberfläche der Elektrode vorgesehen werden kann. Dieser freie Raum kann dadurch geschaffen werden, indem man den Dichtrand nicht bündig mit der Elektrodenoberfläche abschließen läßt, sondern ihn über die Elektrodenoberfläche überstehend ausbildet. Bei Elektroden mit überstehendem Dichtrand kann eine ebene bipolare Platte mit dem Dichtrand verbunden, z.B. gasdicht verklebt werden, oder im Brennstoffzellenstapel unter permanentem Druck angepreßt und damit gasdicht werden. Schließt der Dichtrand bündig mit der Elektrodenoberfläche ab, kann eine bipolare Platte verwendet werden, die in dem Bereich, in dem die Gasführungsstruktur angebracht werden soll, dünner ausgebildet ist als in dem Bereich, der mit dem Dichtrand der Membran-Elektrodeneinheit gasdicht verbunden wird. Bipolare Platten, die eine integrierte Gasführunssstruktur enthalten, z.B. Graphitplatten mit eingefrästen Rillen, erfordern ebenfalls keine überstehenden Dichtränder.

Die erfindungsgemäße Abdichtung der Membran-Elektrodeneinheit ist generell für alle Reaktionsgase anwendbar. Mit besonderem Vorteil kann sie jedoch an der Wasserstoff-Seite einer Brennstoffzelle eingesetzt werden, da Wasserstoff zum einen sehr gut diffundiert und daher die größten Probleme bei der Abdichcung bereitet, und zum anderen sehr reaktiv ist und im Falle eines Lecks erhebliche Schwierigkeiten auftreten.

Die Ausbildung eines Dichtrandes durch Einbringen eines Dichtmittels in die Elekrodenrandbereiche sowie die Abdichtung von Durchführungen durch Einbringen eines Dichtmittels in die die Durchführungen umgebenden Elektrodenbereiche ist grundsätzlich bei jeder Membran-Elektrodeneinheit mit porösen Elektroden möglich, unabhängig davon, ob ein bündiger Stirnseitenabschluß vorliegt. Insbesondere ist auch die erfindungsgemäße Abdichtung von Durchführungen möglich, unabhängig davon, welche Art von Dichtung für den äußeren Umfang der Membran-Elektrodeneinheit gewählt wird.

Besonders vorteilhafte Ausführungsformen der Erfindung werden anhand der nachstehenden Figuren erläutert.

In den Zeichnungen zeigen:
- Fig. 1: einen Querschnitt durch eine erfindungsgemäße Membran-Elektrodeneinheit, noch ohne Dichtrand,
- Fig. 2: eine Aufsicht auf eine erfindungsgemäße Membran-Elektrodeneinheit,
- Fig. 3: einen Querschnitt durch eine Membran-Elektrodeneinheit gemäß dem Stand der Technik,
- Fig. 4: einen Querschnitt durch eine Membran-Elektrodeneinheit mit Dichtrand und Durchführung gemäß einer Ausführungsform der Erfindung (gezeigt ist nur der Dichtrand in den Elektrodenrandbereichen nicht der stirnseitige Dichtrand),
- Fig. 5: einen Querschnitt durch eine Membran-Elektrodeneinheit mit Dichtrand, Durchführung und bipolarer Platte gemäß einer Ausführungsform der Erfindung (gezeigt ist nur der Dichtrand in den Elektrodenrandbereichen nicht der stirnseitige Dichtrand),
- Fig. 6: einen Querschnitt durch eine Membran-Elektrodeneinheit mit Dichtrand gemäß einer Ausführungsform der Erfindung, in Kombination mit beidseitig angebrachten bipolaren Platten (der stirnseitige Dichtrand ist nicht gezeigt),
- Fig. 7: einen Querschnitt durch eine Membran-Elektrodeneinheit mit Dichtrand gemäß einer Ausführungsform der Erfindung in Kombination mit einseitig angebrachter bipolarer Platte,
- Fig. 8: einen Querschnitt durch eine Membran-Elektrodeneinheit gemäß der Erfindung mit überstehenden, mit bipolaren Platten verbundenen Dichträndern (der stirnseitige Dichtrand ist nicht gezeigt),
- Fig. 9: einen Querschnitt durch eine Membran-Elektrodeneinheit gemäß der Erfindung mit bündigen, mit bipolaren Platten verbundenen Dichträndern (der stirnseitige Dichtrand ist nicht gezeigt),
- Fig. 10: einen Querschnitt durch eine Membran-Elektrodeneinheit gemäß der Erfindung mit Durchführungen im Dichtrand,
- Fig. 11: eine Draufsicht auf eine Membran-Elektrodeneinheit gemäß der Erfindung mit Durchführungen im Dichtrand
- Fig. 12: einen Querschnitt durch eine in einen Brennstoffzellenstapel eingebaute Brennstoffzelle mit erfindungsgemäßer Membran-Elektrodeneinheit (der stirnseitige Dichtrand ist nicht gezeigt).

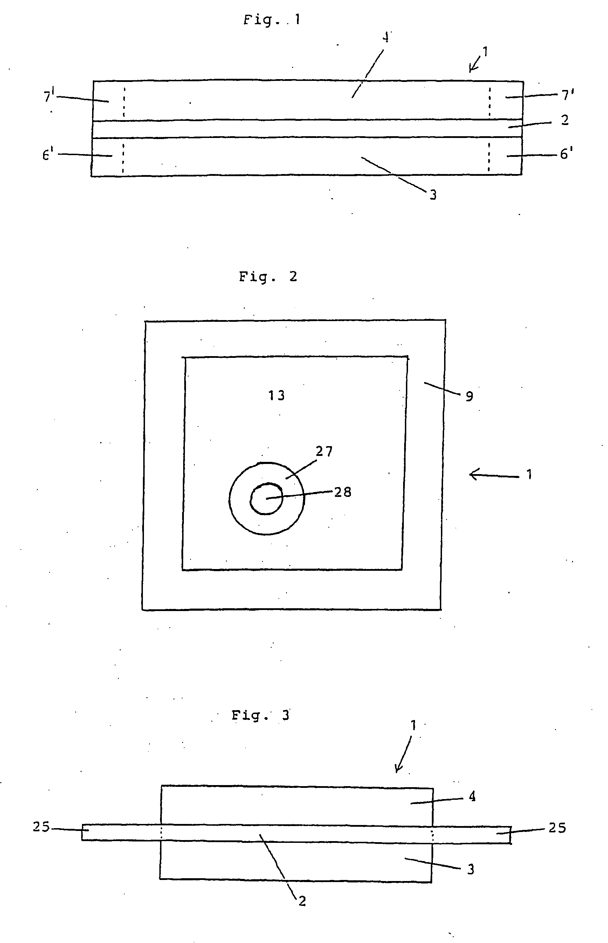

Membran-Elektrodeneinheiten 1 bestehen aus einer Membran 2, einer an einer Oberfläche der Membran angebrachten Anode 3 und einer an der anderen Oberfläche der Membran angebrachten Kathode 4. Die der Membran zugewandten Seite der Elektroden enthält jeweils Katalysator. Bei konventionellen Membran-Elektrodeneinheiten, wie sie in Fig. 3 gezeigt sind, besitzen Anode 3 und Kathode 4 gleiche Abmessungen, während die Membran 2 deutlich größer ist, so daß beim Laminieren Membran-Randbereiche 25 entstehen, die nicht von porösem Elektrodenmaterial bedeckt sind und an denen Dichtungen angebracht werden können. Allerdings schließt ein derartiger Aufbau einfache und schnelle Herstellungsverfahren aus.

Erfindungsgemäß können Membran-Elektrodeneinheiten einfach und schnell hergestellt werden, indem man großflächige Stücke oder Bahnen aus Membran-Elektrodeneinheitmaterial herstellt und dieses dann in einzelne Membran-Elektrodeneinheiten der gewünschten Größe aufteilt. Die so erhaltene einzelne Membran-Elektrodeneinheit weist allerdings, wie aus Fig. 1 ersichtlich ist, außer der Stirnfläche keine Membranfläche auf, die nicht von Elektrodenmaterial bedeckt ist. Konventionelle Dichtungen können daher aufgrund der Porosität der Elektroden nicht angebracht werden.

Erfindungsgemäß wird die Membran-Elektrodeneinheit 1 mit an den Stirnflächen bündigem Abschluß von Membran 2, Anode 3 und Kathode 4 dadurch abgedichtet, daß man ein Dichtmittel, beispielsweise einen Kunststoff, in einen Randbereich 6' der Anode 3 und einen Randbereich 7' der Kathode 4 eindringen läßt. Die Randbereiche 6' und 7' definieren lediglich die Bereiche, in die das Dichtmittel eindringen soll. Das Dichtmittel füllt die Poren der porösen Elektroden und vermittelt eine gasdichte Haftung an der Membran. Ein Austritt von Reaktionsgasen in molekularer Form in "radialer" Richtung aus den Elektroden heraus oder ein Austritt entlang den Grenzflächen zwischen Elektroden und Membran wird damit verhindert. Zusätzlich befindet sich Dichtmittel an den Stirnseite der Membran und einer Elektrode oder beider Elektroden und haftet an diesen.

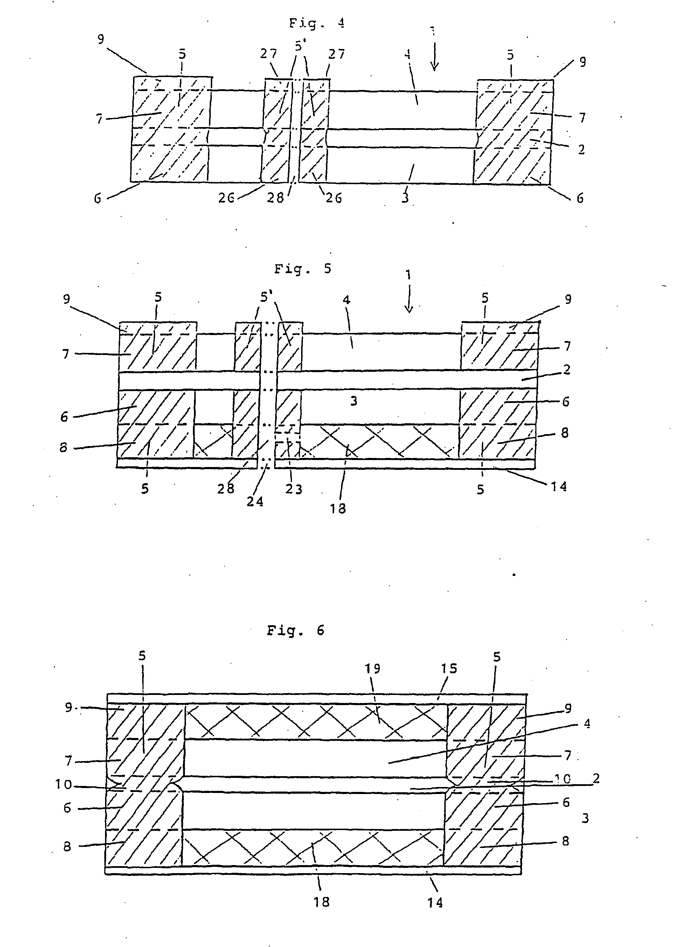

Der Dichtrand 5 der erfindungsgemäßen Membran-Elektrodeneinheit kann hinsichtlich Form und Abmessungen unterschiedlich ausgebildet sein. Fig. 4 zeigt eine Membran-Elektrodeneinheit, bei der der anodenseitige Teil 6 des Dichtrands 5, d.h. der in den Randbereich 6' der Anode eindringende Bereich des Dichtrands 5, bündig mit der membranabgewandten Oberfläche der Anode 3 abschließt, während der kathodenseitige Teil 7 des Dichtrands 5, d.h. der in den Randbereich 7' der Kathode eindringende Bereich des Dichtrands 5, einen Bereich 9 enthält, der über die membranabgewandte Oberfläche der Kathode 4 übersteht. Der an den Stirnflächen der Membran und einer oder beider Elektroden haftende Dichtrand 5 ist in Fig. 4 nicht gezeigt. Die Membran-Elektrodeneinheit enthält außerdem eine Durchführung 28 mit einem Dichtrand 5', d.h. anodenseitigem Dichtrand 26 und kathodenseitigem Dichtrand 27. Der kathodenseitige Teil 27 des Dichtrands 5' steht über die membranabgewandte Oberfläche der Kathode über. Bei der in Fig. 4 gezeigten Ausführungsform gehen sowohl Durchführung 28 als auch Dichtrand 5' durch die gesamte Membran-Elektrodeneinheit 1 hindurch. Auch in die Membran 2 ist Dichtmittel eindiffundiert. Durchführung und/oder Dichtrand können jedoch auch in einer Elektrode enden. Beispielsweise kann durch eine in der Anode teilweise dichtrandfreie Durchführung Wasserstoff zur Anode gebracht werden und in sie hineindiffundieren. Alternativ kann die Durchführung auch im Dichtrand integriert sein, wie nachfolgend noch näher ausgeführt werden wird.

Fig. 2 zeigt eine Aufsicht auf die Ausführungsform gemäß Fig. 4 von der Kathodenseite her. Die hier dargestellte Membran-Elektrodeneinheit ist quadratisch. Sie kann jedoch auch jede beliebige andere Form haben. Wie aus Fig. 2 ersichtlich wird, ist die Kathode an ihrem gesamten Umfang und an der Durchführung 28 abgedichtet und enthält innerhalb des überstehenden Bereichs 9 des Dichtrands einen freien Kathodenbereich 13. Ein derartiger freier Bereich erlaubt es, an der entsprechenden Elektrode Gasführungsstrukturen anzubringen, wie sie bei der Verwendung von Reaktionsgasen mit mässigen Diffusionseigenschaften oder starker Verdünnung durch Inertgase in der Regel erforderlich sind. Bei der Verwendung von Wasserstoff, der über ausgezeichnete Diffusionseigenschaften verfügt, kann häufig auf eine Gasrührungsstruktur verzichtet werden. An der Anodenseite ist es daher bei der Verwendung von H₂ als Brenngas möglich, die die Brennstoffzelle abschließende bipolare Platte ohne Zwischenschaltung einer Gasführungsstruktur direkt auf die Anode 3 aufzusetzen, so daß der anodenseitige Teil 6 des Dichtrands 5 hier bündig mit der Anodenoberfläche abschliessen kann, wie in Fig. 4 gezeigt.

Fig. 5 zeigt eine erfindungsgemäße Membran-Elektrodeneinheit 1, die anodenseitig eine bipolare Platte 14 aufweist. Die bipolare Platte 14 ist gasdicht mit den überstehenden Bereichen 8 des Dichtrands verbunden, z.B. verklebt, so daß zwischen Membran 2, anodenseitigem Dichtrand 6 und bipolarer Platte 14 ein gasdichter Raum gebildet wird. Die Verklebung erfolgt dabei bevorzugt durch das Dichtmittel selbst. Auch hier ist der an den Stirnflächen der Membran und mindestens einer Elektrode haftende Dichtrand 5 nicht gezeigt. Membran-Elektrodeneinheit und bipolare Platte 14 enthalten eine Durchführung 28 bzw. 24 für Brenngas zur Zuleitung bzw. Abführung von Brenngas. Zwischen bipolarer Platte 14, Anode 3 und den überstehenden Bereichen 8 des Dichtrands ist Raum für eine Gasführungsstruktur 18, beispielsweise ein Gitternetz. Bei der in Fig. 5 gezeigten Ausfiihrungsform ist um die Durchführung 28 ein Dichtrand 5' ausgebildet, der über die membranabgewandte Oberfläche der Anode ebensoweit übersteht wie der am Umfang der Membran-Elektrodeneinheit ausgebildete Dichtrand 5. Die bipolare Platte 14 wird so durch den Dichtrand 5' zusätzlich abgestützt. Der durch die Durchführung 28 strömende Wasserstoff tritt zum Teil durch eine Öffnung 23 im Dichtrand 5' in die Gasführungsstruktur 18 der Brennstoffzelle ein, zum Teil wird er durch die Durchführung 24 in der bipolaren Platte 14 zur Nachbarzelle weitergeleitet. Eine derartige Einleitung von Wasserstoff (oder anderen Gasen) ist auch möglich, wenn die Durchführung in den Dichtrand 5 am Umfang der Membran-Elektrodeneinheit integriert ist.

Dasselbe ist für die Oxidationsmittelzufuhr an der Kathode möglich.

Zur Ausbildung des Dichtrandes 5 in Elektroderandbereichen kann ein beliebiges Dichtmittel verwendet werden, das in der Lage ist, in die Poren der Elektrodenrandbereiche einzudringen, unter den Betriebsbedingungen einer Brennstoffzelle im wesentlichen unverändert dort zu verbleiben und eine Barriere gegen den Austritt von Reaktionsgasen zu bilden. Geeignet sind insbesondere aushärtbare Kunststoffe und Kunststoffe, die unter Anwendung von erhöhter Temperatur und/oder Druck gegebenenfalls nach vorherigem Evakuieren in definierten Bereichen in die Poren der Elektroden eindringen können.

Zur Ausbildung des Dichtrands in Elektrodenrandbereichen wird beispielsweise ein in der passenden Größe zugeschnittenes oder ausgestanztes Stück eines Membran-Elektrodenmaterials in eine Vergußform eingelegt, wobei die Bereiche der Elektroden, an denen kein Dichtrand ausgebildet werden soll sowie ggf. die Bereiche, in denen Durchführungen vorgesehen sind, von der Vergußform abgegrenzt werden. Dann kann Kunststoff in flüssiger Form, z.B. ein durch Wärme verflüssigter Thermoplast, eingefüllt und durch Anwendung von Druck, bevorzugt bis ca. 2·10⁷ Pa (200 bar), an den nicht abgegrenzten Bereichen der Elektroden in die Poren der Elektroden gepreßt werden. Je nach dem, ob es gewünscht ist, Dichtränder mit bündigem Abschluß mit den Elektrodenoberflächen oder Dichtränder, die über die Elektrodenoberflächen überstehen, zu erhalten, muß die Ausbildung des Formwerkzeugs entsprechend gewählt werden.

Bei Membran-Elektrodeneinheiten gängiger Abmessungen (ca. 3 cm² bis 1.600 cm² ) ist es günstig, Dichtränder mit einer Breite von näherungsweise 0,3 cm bis 1 cm, typischerweise 0,5 cm, vorzusehen. Die Höhe der gegebenenfalls überstehenden Bereiche des Dichtrands richtet sich nach der Dicke der Gasrührungsstruktur, die an der Elektrode angebracht werden soll.

Alternativ zum Einbringen bzw. Einpressen eines durch erhöhte Temperatur verflüssigten Kunststoffs unter Druck in die Poren der Elektroden kann auch ein aushärtbarer flüssiger Kunststoff von niedriger Viskosität verwendet werden, der auf Grund der Kapillarwirkung in die Poren in den Randbereichen der Elektroden eindringt und anschließend ausgehärtet wird.

Geeignete aushärtbare Kunststoffe sind insbesondere Epoxidharze, Silicone und Polyesterharze, geeignete Thermoplaste sind insbesondere Polyethylene, Polypropylene und Polyamide.

Im folgenden wird ein Beispiel zur Herstellung eines Dichtrands im Elektrodenrandbereich einer Membran-Elektrodeneinheit 1 beschrieben.

Ein Membran-Elektrodenmaterial, das besteht aus einer Membran Gore Select der Firma Gore & Associates, Inc., einer Kathode nach der Patentanmeldung P 19 544 323.3 der Firma Magnet Motor GmbH und einer konventionellen Anode, wird auf eine Größe von etwa 90 x 50 mm zugeschnitten. Bei der Kathode nach der genannten Patentanmeldung handelt es sich um eine Gasdiffusionselektrode aus einem Kohlefaservlies, das mit Ruß und Polytetrafluorethylen (Massenverhältnis hier 5:1) im wesentlichen homogen imprägniert ist, und einer katalytisch aktiven Schicht. Der hier verwendete Katalysator ist Platin auf Kohlenstoff. Die Membran ist vollständig von den Elektroden bedeckt. Die zugeschnittene Membran-Elektrodeneinheit wird in eine Vergußform eingelegt, deren Grundfläche an ihrem Umfang auf einer Breite von etwa 5 mm um etwa 0,3 mm abgesenkt ist. Die Membran-Elektrodeneinheit liegt also an ihrem Randbereich nicht direkt auf der Grundfläche der Vergußform auf. Auf die Membran-Elektrodeneinheit wird eine Platte aus Edelstahl aufgelegt, die eine der Grundplatte entsprechende, hinsichtlich der Anordnung zur Membran-Elektrodeneinheit jedoch spiegelbildliche Form aufweist. Die Membran-Elektrodeneinheit ist also auch an ihrer anderen Oberfläche in einem etwa 5 mm breiten Randbereich nicht in direktem Kontakt mit der Vergußform. Anstelle der Grund- und Abdeckplatte können bipolare Platten verwendet werden, so daß die Membran-Elektrodeneinheit bei der Ausbildung des Dichtrandes gleichzeitig mit den bipolaren Platten verklebt wird. In der Form sind Bohrungen zum Einbringen von Kunststoff vorgesehen, durch die die freien Volumina der Vergußform mit dem Epoxidharz Körapox 439 der Firma Kömmerling (Deutschland) oder dem Zweikomponentenlack CFM 340 auf DD-Basis der Firma Dr. Wiedeking gefüllt werden. Sehr gut geeignet ist auch die Epoxidharzvergußmasse 5100/5620 GA der Firma Rhenatech GmbH. Diese Kunststoffe saugen sich aufgrund der Kapillarwirkung in die Poren der Elektroden, vorwiegend an den nicht abgedeckten Bereichen der Elektroden. Daher ist ein mehrmaliges Nachfüllen während der Topfzeit notwendig. Anschließend werden die Kunststoffe bei etwa 60°C ausgehärtet und die fertige Membran-Elektrodeneinheit entformt. Auf diese Weise wird eine Membran-Elektrodeneinheit mit Dichträndern 6 im Anodenbereich und 7 im Kathodenbereich erzeugt, die eine Breite von ca. 5 mm aufweisen und etwa 0,3 mm über die Oberflächen der Elektroden überstehen.

Abhängig vom Material der Membran 2, dem verwendeten Dichtmittel und den Bedingungen, unter denen der Dichtrand hergestellt wird (Druck, Temperatur), kann das Dichtmittel unter Umständen auch in die Membran eindringen, wodurch mit Dichtmittel gefüllte Bereiche 10 der Membran entstehen, wie in Fig. 6 gezeigt. Je nach gewünschter Dichtrandvariante sind die im Einzelfall jeweils erforderlichen Reaktionsbedingungen vom Fachmann in Abhängigkeit von den gewählten Materialien durch orieritierende Vorversuche leicht zu ermitteln. Membran-Elektrodeneinheiten 1 mit die Membran 2 teilweise durchdringendem Dichtrand 5 besitzen eine extrem hohe Dichtheit gegen den Austritt oder Übertritt von Reaktionsgasen. Die in Fig. 6 gezeigte Ausführungsform der erfindungsgemäßen Membran-Elektrodeneinheit 1 (der stirnseitige Dichtrand 5 ist in Fig. 6 nicht gezeigt) ist mit anodenseitiger Bipolarplatte 14 und kathodenseitiger Bipolarplatte 15 zu einer Brennstoffzelle montiert, wobei zwischen Membran 2, anodenseitigem Dichtrand 6 und Bipolarplatte 14 bzw. zwischen Membran 2, kathodenseitigem Dichtrand 7 und Bipolarplatte 15 jeweils gasdichte Räume ausgebildet sind. Zwischen den überstehenden Bereichen 8 bzw. 9 der Dichtränder sind Hohlräume zur Aufnahme von Gasführungsstrukturen 18 bzw. 19 vorgesehen.

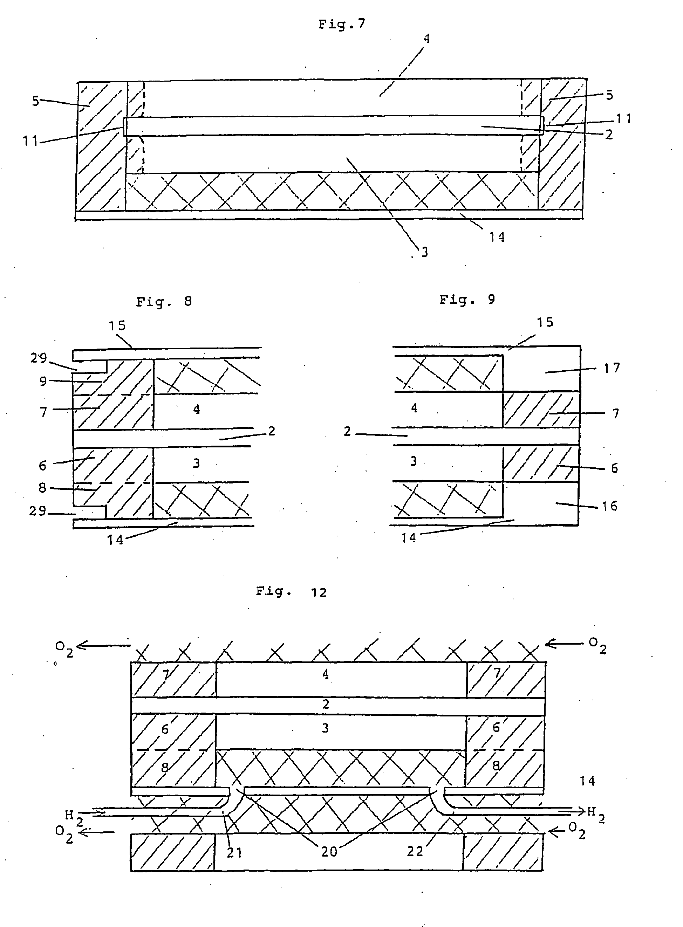

Die volltändige Ausführungsform des Dichtrandes 5 einer erfindungsgemäßen Membran-Elektrodeneinheit 1 ist in Fig. 7 dargestellt. Der Dichtrand 5 dringt nicht nur in Poren des Elektrodenmaterials ein, sondern haftet auch an der Stirnfläche der Membran und einer Elektrode, oder, wie in Fig. 7 gezeigt, am Umfang der gesamten Membran-Elektrodeneinheit. Dabei muß gewährleistet sein, daß die Haftung zwischen Dichtmaterial und der Membran bzw. den Materialien der Elektroden fest und dicht genug ist, um einen Austritt von Reaktionsgasen zu verhindern. Als Materialien zur Ausbildung des stirnseitigen Dichtrandes 5 kommen Kunststoffe in Frage, und zwar in erster Linie solche, wie sie auch für den im Elektrodenrandbereich ausgebildeten Dichtrand geeignet sind. Um die Haftung an der Stirnseite der sehr dünnen Membran 2 in jedem Fall zu gewährleisten, kann vor dem Anbringen des Dichtrands 5 ein Haftvermittler, z.B. ein SiO₂ ausscheidender Haftvermittler, 11 aufgebracht werden oder die Stirnseite der Membran kann angeätzt werden. Der erfindungsgemäße Dichtrand eignet sich für etwas dickere Membranen (ab ca. 100 µm) und andere, z.B. beliebig dünne Membranen (z.B. 5 µm).

Die Anbringung des Dichtrandes an der Stirnseite erfolgt ähnlich wie die Ausbildung des Dichtrandes, der nur in Randbereichen der Elektroden ausgebildet wird, nämlich durch Einlegen eines Stücks eines Membran-Elektrodenmaterials geeigneter Größe in eine Vergußform, die in den Bereichen, an denen der Dichtrand ausgebildet werden soll, Raum für die Einbringung des Dichtmittels läßt, Einbringen und anschließendes Verfestigen bzw. Aushärten des Dichtmittels. Dichtränder nur an der Stirnseite bzw. nur im Elektrodenrandbereich sind nicht Gegenstand der vorliegenden Erfindung. Sollen im Dichtrand Durchführungen vorgesehen werden, muß die Vergußform so ausgebildet sein, daß in die Durchführungsbereiche kein oder wenig Dichtmittel eindringen kan. Dies ist beispielsweise durch Einsetzen von Stiften möglich, an denen das Dichtmittel schlecht haftet, und die daher leicht wieder entfernt werden können. Die Breite stirnseitig angebrachter Dichtränder liegt bei Membran-Elektrodeneinheiten üblicher Größe bei etwa 0,2 cm bis 1 cm, bevorzugt bei ca. 0,5 cm oder weniger.

Die Reaktionsbedingungen werden erfindungsgemäß so gewählt, daß beim Ausbilden des Dichtrands an den Stirnseiten von Membran 2 und Elektroden 3, 4 am Umfang der Membran-Elektrodeneinheit auch Dichtmittel in die Randbereiche der Elektroden eintritt, so daß eine Kombination aus stirnseitigem Dichtrand und Dichtrand in den Elektrodenrandbereichen 6', 7' erhalten wird, wie es in Fig. 7 durch die gestrichelten Linien angedeutet ist.

Die Fig. 8 und 9 zeigen alternative Möglichkeiten zur Ausbildung eines Hohlraums zur Aufnahme einer Gasführungsstruktur, wobei Fig. 8 die vorstehend erläuterte Möglichkeit der Ausbildung überstehender Dichtränder zeigt. In der in Fig. 9 gezeigten Ausführungsform schließen die Dichtränder 6 und 7 an Anode bzw. Kathode bündig mit der Oberfläche von Anode bzw. Kathode ab. Dafür hat die bipolare Platte 14 bzw. 15 einen dünnen Mittelbereich sowie einen dicken Randbereich 16 bzw. 17, wobei die Differenz aus der Dicke des Randbereichs und der Dicke des Mittelbereichs die Höhe des zur Aufnahme einer Gasführungsstruktur zur Verfügung stehenden Hohlraums definiert. Die Breite der Randbereiche 16 und 17 wird bevorzugt entsprechend der Breite des Dichtrands 5 gewählt. Der Stirnseitige Teil der Dichtrands ist in den Figuren 8 und 9 nicht gezeigt.

Zur Erzielung einer besonders festen Haftung zwischen Dichtrand 5 und bipolarer Platte 14, 15 können in den überstehenden Bereichen 8, 9 des Dichtrandes Aussparungen 29 zur Aufnahme eines zusätzlichen Klebstoffs, z.B. Silicon, vorgesehen werden.

Zur Zuleitung von Reaktionsgasen, Kühlmittel oder zur Anbringung von Befestigungsvorrichtungen ist es oft erforderlich, eine oder mehrere Öffnungen oder Durchführungen in den Membran-Elektrodeneinheiten vorzusehen, die gegen ein Austreten oder Übertreten von Gasen abgedichtet werden müssen. Diese Durchführungen können jede fiir sich separat abgedichtet werden, wie es in den Figuren 4 und 5 gezeigt ist, bei denen jeweils nur eine Durchführung vorhanden ist, die durch mit Dichtmittel gefüllte Bereiche 5' abgedichtet wird. Wenn mehrere Durchführungen benötigt werden, können diese auch zu einer oder mehreren Gruppen nahe beieinanderliegender Durchführungen zusammengefaßt werden, die gemeinsam abgedichtet werden, d. h., die Durchführungen einer Gruppe werden voneinander und vom aktiven Bereich der Membran-Elektrodeneinheit durch mit Dichtmittel gefüllte Bereiche 5' getrennt.

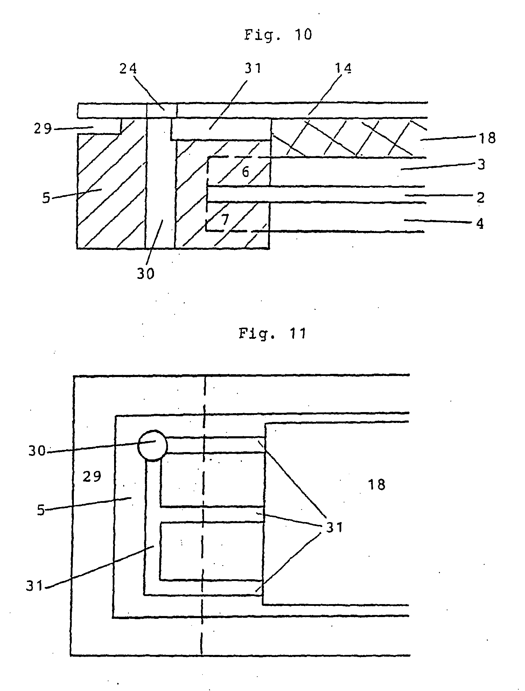

Bei diesen Ausführungsformen muß allerdings für die Durchführungen und ihre Abdichtungen ein Teilbereich der Membran-Elektrodeneinheit verwendet werden, der ansonsten als aktiver Bereich zur Verfügung stünde. Dieser Verlust an aktivem Bereich kann vermieden werden, wenn man die Durchführungen in den Dichtrand am Umfang der Membran-Elektrodeneinheit integriert, wie es beispielhaft in den Figuren 10 und 11 dargestellt ist.

Fig. 10 zeigt eine Membran-Elektrodeneinheit mit Membran 2, Anode 3, Kathode 4 und Dichtrand 5 am Außenumfang der Membran-Elektrodeneinheit in kombination mit Dichtmittel in den Randbereichen von Anode 3 und Kathode 4 unter Ausbildung des Dichtbereichs 6 bzw. 7 des Dichtrands 5. Der Dichtrand 5 steht über die Anodenoberfläche sowie über die Kathodenoberfläche über. In dem nur aus Dichtmittel bestehenden Bereich des Dichtrands ist eine zur Ebene der Membran-Elektrodeneinheit im wesentlichen senkrecht verlaufende Durchführung 30 vorgesehen. In Höhe des über die Anodenoberfläche überstehenden Bereichs des Dichtrands 5 zweigen davon waagrechte, d. h. parallel zur Membran-Elektrodeneinheit verlaufende Verteilerdurchführungen ab, wie aus Fig. 11 ersichtlich ist. Fig. 11 zeigt eine Aufsicht auf die Membran-Elektrodeneinheit gemäß Fig. 10 von der Anodenseite her (ohne bipolare Platte 14). Diese Verteilerdurchführungen haben, vorwiegend aus Gründen der einfachen Herstellbarkeit, die Form von Rillen 31 in der anodenseitigen Oberfläche des Dichtrands 5 und münden in den eine Gasführungsstruktur 18 enthaltenden Raum zwischen Anodenoberfläche und bipolarer Platte 14. Die Rillen 31 können bei der Herstellung des Dichtrands durch Verwendung einer passend ausgebildeten Vergußform in die Oberfläche des Dichtrands 5 eingeformt oder nachträglich in den Dichtrand eingeformt, z. B. eingefräst, werden. Die bipolare Platte 14 besitzt an der über der Durchführung 30 gelegenen Stelle eine Durchführung 24 und schließt ansonsten die Rillen 31 und den Raum für die Gasführungsstruktur 18 über der Anode gasdicht ab. Auf diese Weise kann Wasserstoff, der durch die Durchführung 30 strömt, einerseits durch die Rillen 31 der Anode 3 zugeführt werden und andererseits durch die Durchführung 24 in der bipolaren Platte 14 in die Nachbarzelle weitergeleitet werden. Zur Erzielung einer besonders festen Haftung zwischen Dichtrand und bipolarer Platte ist in dem Dichtrand eine Aussparung 29 vorgesehen, in die zusätzlicher Klebstoff eingebracht wird.

Die erfindungsgemäße Membran-Elektrodeneinheit mit Durchführungen im Dichtrand kann hergestellt werden, wie es vorstehend für Dichtränder ohne Durchführung beschrieben wurde, wobei die Bereiche der späteren Durchrührungen und Rillen von der Form abgegrenzt werden müssen, so daß kein Dichtmittel eindringen kann. Alternativ kann auch zuerst ein Dichtrand ohne Durchführung und/oder Rillen hergestellt werden und diese dann am fertigen Dichtrand angebracht werden, etwa durch Bohren, Stanzen oder Fräsen.

Fig. 12 zeigt einen Ausschnitt aus einem Brennstoffzellen-Stapel mit Brennstoffzellen, die erfindungsgemäße Membran-Elektrodeneinheiten 1 aufweisen. Bei dem gezeigten Brennstoffzellenstapel wird Sauerstoff nicht in abgeschlossene und abgedichtete Oxidationsmittelgas-Räume eingeführt, sondern mittels eines Ventilators zwischen der den Abschluß einer Zelle bildenden bipolaren Platte und der Kathodenoberfläche der Nachbarzelle hindurchgeblasen, wobei ein Gitternetz zwischen bipolarer Platte und Kathode die Einhaltung des erforderlichen Abstands garantiert. Die in Fig. 12 gezeigte Einheit aus Membran 2, Anode 3, Kathode 4 und bipolarer Platte 14 (mit Gasdurchlässen 20 für Wasserstoff) kann, sollte sich im Laufe der Betriebsdauer des Brennstoffzellenstapels irgendwo ein Wasserstoff-Leck gebildet haben, problemlos einzeln aus dem Stapel entfernt werden, so daß der Anodenraum jeder einzelnen Zelle separat auf Dichtheit überprüft werden kann. Der stirnseitige Teil des Dichtrands ist in Fig. 12 nicht gezeigt.

Die vorliegende Erfindung ermöglicht es somit, auf einfache und preiswerte Art Membran-Elektrodeneinheiten herzustellen, die in Kombination mit einer bipolaren Platte die Ausbildung gasdichter Elektrodenräume ermöglichen. In jeder Brennstoffzelle können die gasdichten Elektrodenräume separat auf Dichtheit überprüft werden.

### BEZUGSZEICHENLISTE

- 1: Membran-Elektrodeneinheit
- 2: Polymerelektrolytmembran
- 3: Anode
- 4: Kathode
- 5: Dichtrand am Umfang der Membran-Elektrodeneinheit
- 5': Dichtrand um Durchführung 28
- 6': Randbereich am Umfang der Anode, in den das Dichtmittel eindringen soll
- 6: anodenseitiger Bereich des Dichtrands 5
- 7': Randbereich am Umfang der Kathode, in den das Dichtmittel eindringen soll
- 7: kathodenseitiger Bereich des Dichtrands 5
- 8: über die Anodenoberfläche überstehender Bereich des Dichtrands 5
- 9: über die Kathodenoberfläche überstehender Bereich des Dichtrands 5
- 10: mit Dichtmittel gefüllter Membranrandbereich
- 11: Haftvermittler
- 13: dichtrandfreier Kathodenbereich
- 14: anodenseitige bipolare Platte
- 15: kathodenseitige bipolare Platte
- 16: verdickter Randbereich der anodenseitigen bipolaren Platte
- 17: verdickter Randbereich der kathodenseitigen bipolaren Platte
- 18: anodenseitige Gasführungsstruktur
- 19: kathodenseitige Gasführungsstruktur
- 20: Gasdurchlaß für Wasserstoff in bipolarer Platte 14
- 21: Zuleitung für Wasserstoff
- 22: Ableitung für Wasserstoff
- 23: Öffnung im Dichtrand 5'
- 24: Durchführung in bipolarer Platte 14
- 25: Membranrandbereiche, nicht von Elektrodenmaterial bedeckt
- 26': anodenseitiger Randbereich um Durchführung 28
- 26: anodenseitiger Bereich des Dichtrands 5'
- 27': kathodenseitiger Randbereich um Durchführung 28
- 27: kathodenseitiger Bereich des Dichtrands 5'
- 28: Durchführung durch Membran-Elektrodeneinheit
- 29: Aussparung im Dichtrand zur Aufnahme von Klebstoff zur Verklebung mit Bipolarplatte
- 30: Durchführung durch Dichtrand 5
- 31: Rillen im Dichtrand 5

## Patentansprüche

1. Membran-Elektrodeneinheit (1) mit integriertem Dichtrand (5) für eine Polymerelektrolytmembran-Brennstoffzelle mit einer Polymerelektrolytmembran (2), einer an einer Oberfläche der Membran angeordneten Anode (3) und einer an der anderen Oberfläche der Membran angeordneten Kathode (4),
**dadurch gekennzeichnet, dass** die Membran-Elektrodeneinheit (1) einen an den Stirnflächen bündigen Abschluss von Membran (2), Anode (3) und Kathode (4) aufweist, so dass die Membran (2) an beiden Oberflächen im Wesentlichen vollständig von den Elektroden (3, 4) bedeckt ist, und dass um den Umfang der Membran-Elektrodeneinheit (1) ein Dichtrand (5) vorgesehen ist, der einen Randbereich (6', 7') mindestens einer der Elektroden (3, 4) dergestalt durchdringt, dass die Poren der mindestens einen Elektrode in dem Randbereich im Wesentlichen gefüllt sind, und der an dem mit dem Randbereich (6', 7') in Berührung stehenden Bereich der Membran (2) und an den Stirnflächen der Membran (2) und der mindestens einen Elektrode (3, 4) haftet.

2. Membran-Elektrodeneinheit (1) nach Anspruch 1,
**dadurch gekennzeichnet, dass** sie mindestens eine Durchführung (28) aufweist, an der mindestens in einem Teilbereich ein Dichtrand (5') vorgesehen ist,
- der einen die Durchführung umgebenden Randbereich (26', 27') mindestens einer der Elektroden (3, 4) dergestalt durchdringt, dass die Poren der mindestens einen Elektrode in dem Randbereich im Wesentlichen gefüllt sind, und der an dem mit dem Randbereich (26', 27') in Berührung stehenden Bereich der Membran (2) haftet und/oder
- der an den Stirnflächen mindestens der Membran (2) haftet.

3. Membran-Elektrodeneinheit (1) nach Anspruch 1 oder 2,
**dadurch gekennzeichnet, dass** sie mindestens eine Durchführung (30) in dem Dichtrand (5) um den Umfang der Membran-Elektrodeneinheit aufweist.

4. Membran-Elektrodeneinheit (1) nach Anspruch 3,
**dadurch gekennzeichnet, dass** im Dichtrand (5) mindestens eine mit der Durchführung (30) in Verbindung stehende Einrichtung (31) zur Zuführung eines Reaktionsgases zu mindestens einer Elektrode oder einem Elektrodenraum ausgebildet ist.

5. Membran-Elektrodeneinheit (1) nach Anspruch 4,
**dadurch gekennzeichnet, dass** die mindestens eine Einrichtung (31) in einer Oberfläche des Dichtrands (5) vorgesehene Rillen sind.

6. Membran-Elektrodeneinheit (1) nach einem der Ansprüche 1 bis 5, **dadurch gekennzeichnet, dass** der Dichtrand (5) einen Randbereich (6') der Anode (3) durchdringt und an dem mit dem Randbereich (6') in Berührung stehenden Bereich der Membran (2) haftet.

7. Membran-Elektrodeneinheit (1) nach einem der Ansprüche 1 bis 6, **dadurch gekennzeichnet, dass** der Dichtrand (5) an den Strinflächen mindestens der Anode (3) und den Stirnflächen der Membran (2) haftet.

8. Membran-Elektrodeneinheit (1) nach einem der Ansprüche 1 bis 7, **dadurch gekennzeichnet, dass** der Dichtrand (5, 5') bündig mit der membranabgewandten Oberfläche der mindestens einen Elektrode (3, 4) abschließt.

9. Membran-Elektrodeneinheit (1) nach einem der Ansprüche 1 bis 7, **dadurch gekennzeichnet, dass** der Dichtrand (5, 5') übersteht über die membranabgewandte Oberfläche der mindestens einen Elektrode (3, 4).

10. Membran-Elektrodeneinheit (1) nach Anspruch 9,
**dadurch gekennzeichnet, dass** in dem überstehenden Bereich des Dichtrandes (5) eine Aussparung (29) zur Aufnahme eines Klebstoffs vorgesehen ist.

11. Membran-Elektrodeneinheit (1) nach einem der Ansprüche 1 bis 10, **dadurch gekennzeichnet, dass** der Dichtrand (5, 5') aus Kunststoff besteht oder Kunststoff enthält.

12. Membran-Elektrodeneinheit (1) nach Anspruch 11,
**dadurch gekennzeichnet, dass** der Kunststoff ein Thermoplast oder ein aushärtbarer Kunststoff ist, der in geschmolzenem Zustand bzw. vor dem Aushärten ausreichend flüssig und niederviskos ist, um durch Kapillarwirkung in die Poren mindestens einer der Elektroden (3, 4) eindringen zu können.

13. Membran-Elektrodeneinheit (1) nach Anspruch 11,
**dadurch gekennzeichnet, dass** der Kunststoff bei Raumtemperatur oder erhöhter Temperatur ausreichend flüssig und niederviskos ist, um unter Druck in die Poren mindestens einer der Elektroden (3, 4) eindringen zu können.

14. Membran-Elektrodeneinheit (1) nach einem der Ansprüche 11 bis 13, **dadurch gekennzeichnet, dass** der Kunststoff ein Polyethylen, ein Polypropylen oder ein Polyamid ist.

15. Membran-Elektrodeneinheit (1) nach einem der Ansprüche 11 bis 13, **dadurch gekennzeichnet, dass** der Kunststoff ein Epoxidharz, ein Silicon oder ein Polyesterharz ist.

16. Membran-Elektrodeneinheit (1) nach einem der Ansprüche 1 bis 15, **dadurch gekennzeichnet, dass** der Dichtrand (5) mindestens der Anode (3) mit einer Bipolarplatte (14, 15) wasserstoffdicht verklebt ist.

17. Verfahren zur Herstellung einer Membran-Elektrodeneinheit (1) mit integriertem Dichtrand (5) für eine Polymerelektrolytmembran-Brennstoffzelle, folgende Schritte aufweisend:
- Bereitstellen eines Membran-Elektroden-Schichtmaterials aus Anodenmaterial (3), Kathodenmaterial (4) und dazwischen angeordnetem Polymerelektrolytmembran-Material (2).
- Abtrennen eines Teilstücks des Schichtmaterials in der zur Herstellung der gewünschten Membran-Elektrodeneinheit (1) geeigneten Größe, wobei das abgetrennte Teilstück einen an den Stirnflächen bündigen Abschluss von Membran (2), Anode (3) und Kathode (4) aufweist, so dass in dem abgetrennten Teilstück die Membran (2) an beiden Oberflächen im Wesentlichen vollständig von den Elektroden (3, 4) bedeckt ist,
- Ausbilden eines Dichtrandes (5) um den Umfang des Teilstücks durch Eindringenlassen eines Dichtmittels in den Randbereich (6', 7) mindestens einer der Elektroden (3, 4), wobei die Poren der mindestens einen Elektrode (3, 4) in dem Randbereich im Wesentlichen vollständig gefüllt werden, so dass der Dichtrand (5) einen Randbereich (6', 7') der mindestens einen Elektrode (3, 4) durchdringt und an dem mit dem Randbereich (6', 7') in Berührung stehenden Bereich der Membran (2) haftet, und Anbringen des Dichtmittels an den Stirnflächen der mindestens einen Elektrode (3, 4) und den Stirnflächen der Membran (2), so dass der Dichtrand an den Stirnflächen der Membran (2) und der mindestens einen Elektrode (3, 4) haftet.

18. Verfahren nach Anspruch 17, außerdem folgende Schritte aufweisend:
- Ausbilden einer Durchführung (28) und
- Ausbilden eines Dichtrands (5') mindestens an einem Teilbereich eines die Durchführung umgebenden Randbereichs (26', 27') mindestens einer der Elektroden (3, 4)
- durch Eindringenlassen eines Dichtmittels in den Randbereich (26', 27') der mindestens einen Elektrode (3, 4), wobei die Poren der mindestens einen Elektrode (3, 4) in dem Randbereich im Wesentlichen vollständig gefüllt werden, so dass der Dichtrand den Randbereich durchdringt und an dem mit dem Randbereich in Berührung stehenden Bereich der Membran (2) haftet, und/oder
- durch Anbringen eines Dichtmittels an den Stirnflächen mindestens der Membran (2), so dass der Dichtrand an den Stirnflächen mindestens der Membran (2) haftet.

19. Verfahren nach Anspruch 17 oder 18,
**dadurch gekennzeichnet, dass** in dem Dichtrand (5) um den Umfang der Membran-Elektrodeneinheit (1) mindestens eine Durchführung (30) ausgebildet wird.

20. Verfahren nach Anspruch 19,
**dadurch gekennzeichnet, dass** in dem Dichtrand (5) mindestens eine mit der Durchführung (3) in Verbindung stehende Einrichtung (31) zur Zuführung eines Reaktionsgases zu mindestens einer Elektrode oder einem Elektrodenraum ausgebildet wird.

21. Verfahren nach Anspruch 20,
**dadurch gekennzeichnet, dass** die mindestens eine Einrichtung (31) in Form von Rillen in einer Oberfläche des Dichtrands (5) vorgesehen wird.

22. Verfahren nach einem der Ansprüche 17 bis 21,
**dadurch gekennzeichnet, dass** der Dichtrand (5, 5') unter Verwendung von thermoplastischem oder aushärtbarem Kunststoff ausgebildet wird.

23. Verfahren nach Anspruch 22,
**dadurch gekennzeichnet, dass** als Kunststoff Polyethylen, Polypropylen oder ein Polyamid verwendet wird.

24. Verfahren nach Anspruch 22,
**dadurch gekennzeichnet, dass** als Kunststoff ein Epoxidharz, ein Silicon oder ein Polyesterharz verwendet wird.

25. Verfahren nach einem der Ansprüche 22 bis 24,
**dadurch gekennzeichnet, dass** der Dichtrand (5, 5') ausgebildet wird durch Inkontaktbingen von Kunststoff in flüssiger Form mit einem Randbereich (6', 7', 26', 27') mindestens einer der Elektroden (3, 4) und Verfestigen bzw. Aushärten.

26. Verfahren nach einem der Ansprüche 22 bis 25,
**dadurch gekennzeichnet, dass** der Dichtrand (5') an einer Durchführung (28) ausgebildet wird durch Inkontaktbringen von Kunststoff in flüssiger Form mit den Stirnflächen mindestens der Membran (2) und Verfestigen bzw. Aushärten.

27. Verfahren nach einem der Ansprüche 17 bis 26,
**dadurch gekennzeichnet, dass** der Dichtrand (5, 5') unter Anwendung von Druck und/oder erhöhter Temperatur ausgebildet wird.

28. Verfahren nach Anspruch 27,
**dadurch gekennzeichnet, dass** vor der Anwendung von Druck evakuiert wird.

29. Verfahren nach einem der Ansprüche 17 bis 28,
**dadurch gekennzeichnet, dass** der Dichtrand (5, 5') ausgebildet wird durch Eindringenlassen des Dichtmittels aufgrund von Kapillarwirkung in den Randbereich (6', 7') mindestens einer der Elektroden (3, 4).

30. Verfahren nach einem der Ansprüche 17 bis 29,
**dadurch gekennzeichnet, dass** der Dichtrand (5, 5') dergestalt ausgebildet wird, dass er bündig mit der membranabgewandten Oberfläche mindestens einer der Elektroden (3, 4) abschließt.

31. Verfahren nach einem der Ansprüche 17 bis 29,
**dadurch gekennzeichnet, dass** der Dichtrand (5, 5') dergestalt ausgebildet wird, dass er über die membranabgewandte Oberfläche mindestens einer der Elektroden (3, 4) übersteht.

32. Verfahren nach einem der Ansprüche 17 bis 31,
**dadurch gekennzeichnet, dass** die Bereiche der Elektroden (3, 4) und/oder der Membran (2), an denen der Dichtrand (5, 5') ausgebildet werden soll, vor der Ausbildung des Dichtrands vorbehandelt werden.

33. Verfahren nach Anspruch 32,
**dadurch gekennzeichnet, dass** die Vorbehandlung in einem Benetzen der Bereiche der Elektrode (3, 4), an denen der Dichtrand ausgebildet werden soll, mit einem Lösungsmittel des Dichtmittels besteht.

34. Verfahren nach Anspruch 32,
**dadurch gekennzeichnet, dass** die Vorbehandlung in einem Anfräsen der Bereiche der Oberfläche der Elektrode (3, 4), an denen der Dichtrand ausgebildet werden soll, besteht.

35. Verfahren nach Anspruch 32,
**dadurch gekennzeichnet, dass** die Vorbehandlung in einem teilweisen Oxidieren der Bereiche der Kohlenstoffmaterialien der Elektrode (3, 4), an denen der Dichtrand ausgebildet werden soll, besteht.

## Claims

1. A membrane-electrode unit (1) with integrated sealing edge (5) for a polymer electrolyte membrane fuel cell having a polymer electrolyte membrane (2), an anode (3) arranged on one surface of the membrane and a cathode (4) arranged on the other surface of the membrane,
**characterized in that** in the membrane-electrode unit (1), the membrane (2), anode (3) and cathode (4) terminate in flush manner at the end faces, such that the membrane (2) on both surfaces thereof is covered substantially completely by the electrodes (3, 4), and **in that** a sealing edge (5) is provided around the periphery of the membrane-electrode unit (1), said sealing edge (5) penetrating an edge portion (6', 7') of at least one of the electrodes (3, 4) such that the pores of the at least one electrode are substantially filled in the edge portion, and adhering to the portion of the membrane (2) in contact with said edge portion (6', 7'), and adhering to the end faces of said membrane (2) and said at least one electrode (3, 4).

2. The membrane-electrode unit (1) of claim 1,
**characterized in that** it comprises at least one passage (28) on which, at least in a partial region, a sealing edge (5') is provided
- which penetrates a passage-surrounding edge portion (26', 27') of at least one of the electrodes (3, 4) such that the pores of the at least one electrode are substantially filled in said edge portion, and adheres to the portion of the membrane (2) in contact with the edge portion (26', 27') and/or
- adheres to the end faces at least of said membrane (2).

3. The membrane-electrode unit (1) of claim 1 or 2,
**characterized in that** it has at least one passage (30) in the sealing edge (5) around the periphery of the membrane-electrode unit.

4. The membrane-electrode unit (1) of claim 3,
**characterized in that** the sealing edge (5) has formed therein at least one means (31) communicating with said passage (30) for supplying a reaction gas to at least one electrode or an electrode space.

5. The membrane-electrode unit (1) of claim 4,
**characterized in that** said at least one means (31) are grooves provided in a surface of the sealing edge (5).

6. The membrane-electrode unit (1) of any of claims 1 to 5,
**characterized in that** the sealing edge (5) penetrates an edge portion (6') of the anode (3) and adheres to the portion of the membrane (2) in contact with said edge portion (6').

7. The membrane-electrode unit (1) of any of claims 1 to 6,
**characterized in that** the sealing edge (5) adheres to the end faces at least of the anode (3) and to the end faces of the membrane (2).

8. The membrane-electrode unit (1) of any of claims 1 to 7,
**characterized in that** the sealing edge (5, 5') terminates flush with the surface of the at least one electrode (3, 4) facing away from said membrane.

9. The membrane-electrode unit (1) of any of claims 1 to 7,
**characterized in that** the sealing edge (5, 5') is projecting beyond the surface of the at least one electrode (3, 4) facing away from said membrane.

10. The membrane-electrode unit (1) of claim 9,
**characterized in that** a recess (29) for receiving adhesive is provided in the projecting portion of the sealing edge (5).

11. The membrane-electrode unit (1) of any of claims 1 to 10,
**characterized in that** the sealing edge (5, 5') consists of plastics material or contains plastics material.

12. The membrane-electrode unit (1) of claim 11,
**characterized in that** the plastics material is a thermoplastic material or a curable plastics material which, in the molten state or prior to curing, respectively, is sufficiently liquid and of sufficiently low viscosity for being able to penetrate into the pores of at least one of the electrodes (3, 4) by capillary action.

13. The membrane-electrode unit (1) of claim 11,
**characterized in that** the plastics material, at ambient temperature or elevated temperature, is sufficiently liquid and of sufficiently low viscosity to be able to penetrate into the pores of at least one of the electrodes (3, 4) under pressure.

14. The membrane-electrode unit (1) of any of claims 11 to 13,
**characterized in that** the plastics material is a polyethylene, a polypropylene or a polyamide.

15. The membrane-electrode unit (1) of any of claims 11 to 13,
**characterized in that** the plastics material is an epoxy resin, a silicone or a polyester resin.

16. The membrane-electrode unit (1) of any of claims 1 to 15,
**characterized in that** the sealing edge (5) at least of the anode (3) is adhered to a bipolar plate (14, 15) in hydrogen-tight manner.

17. A method of making a membrane-electrode unit (1) with integrated sealing edge (5) for a polymer electrolyte membrane fuel cell, comprising the following steps:
- providing a membrane-electrode layer material of anode material (3), cathode material (4) and polymer electrolyte membrane material (2) disposed therebetween,
- severing a piece of the layer material in the size suitable for making the desired membrane-electrode unit (1), wherein in the severed piece the membrane (2), anode (3) and cathode (4) terminate in flush manner at the end faces, such that the membrane (2) in said severed piece, on both surfaces thereof, is covered substantially completely by the electrodes (3, 4),
- forming a sealing edge (5) around the periphery of said piece by having a sealing agent penetrate into the edge portion (6', 7') of at least one of the electrodes (3, 4), with the pores of the at least one electrode (3, 4) being filled substantially completely in said edge portion such that the sealing edge (5) penetrates an edge portion (6', 7') of the at least one electrode (3, 4) and adheres to the portion of the membrane (2) in contact with the edge portion (6', 7'), and by applying the sealing agent to the end faces of the at least one electrode (3, 4) and to the end faces of the membrane (2) such the sealing edge adheres to the end faces of said membrane (2) and to the end faces of said at least one electrode (3, 4).

18. The method of claim 17, further comprising the following steps:
- forming a passage (28) and
- forming a sealing edge (5') at least on a partial region of a passage-surrounding edge portion (26', 27') of at least one of the electrodes (3, 4)
- by having a sealing agent penetrate into the edge portion (26', 27') of the at least one electrode (3, 4), with the pores of the at least one electrode (3, 4) being filled substantially completely in said edge portion, such that the sealing edge penetrates the edge portion and adheres to the portion of the membrane (2) in contact with the edge portion and/or
- by applying a sealing agent to the end faces at least of said membrane (2) such that the sealing edge adheres to the end faces at least of said membrane (2).

19. The method of claim 17 or 18,
**characterized in that** at least one passage (30) is formed in the sealing edge (5) around the periphery of the membrane-electrode unit (1).

20. The method of claim 19,
**characterized in that**, in the sealing edge (5), there is formed at least one means (31) communicating with the passage (3) for supplying a reaction gas to at least one electrode or an electrode space.

21. The method of claim 20,
**characterized in that** the at least one means (31) is provided in the form of grooves in a surface of the sealing edge (5).

22. The method of any of claims 17 to 21,
**characterized in that** the sealing edge is formed using thermoplastic or curable plastics material.

23. The method of claim 22,
**characterized in that** polyethylene, polypropylene or a polyamide is used as plastics material.

24. The method of claim 22,
**characterized in that** an epoxy resin, a silicone or a polyester resin is used as plastics material.

25. The method of any of claims 22 to 24,
**characterized in that** the sealing edge (5, 5') is formed by bringing plastics material in liquid form in contact with an edge portion (6', 7', 26', 27') of at least one of the electrodes (3, 4), and solidifying or curing.

26. The method of any of claims 22 to 25,
**characterized in that** the sealing edge (5') is formed on a passage (28) by bringing plastics material in liquid form in contact with the end faces at least of the membrane (2), and solidifying or curing.

27. The method of any of claims 17 to 26,
**characterized in that** the sealing edge (5, 5') is formed using pressure and/or elevated temperature.

28. The method of claim 27,
**characterized in that** evacuation is carried out prior to the application of pressure.

29. The method of any of claims 17 to 28,
**characterized in that** the sealing edge (5, 5') is formed by having the sealing agent penetrate by capillary action into the edge portion (6', 7') of at least one of the electrodes (3, 4).

30. The method of any of claims 17 to 29,
**characterized in that** the sealing edge (5, 5') is designed such that it terminates flush with the surface of at least one of the electrodes (3, 4) facing away from the membrane.

31. The method of any of claims 17 to 29,
**characterized** n that the sealing edge (5, 5') is designed such that it projects beyond the surface of at least one of the electrodes (3, 4) facing away from the membrane.

32. The method of any of claims 17 to 31,
**characterized in that** the portions of the electrodes (3, 4) and/or of the membrane (2), on which the sealing edge (5, 5') is to be formed, are pretreated before formation of the sealing edge.

33. The method of claim 32,
**characterized in that** said pretreatment consists in wetting the portions of the electrode (3, 4) on which the sealing edge is to be formed, with a solvent of the sealing agent.

34. The method of claim 32,
**characterized in that** said pretreatment consists in milling of the portions of the surface of the electrode (3, 4) on which the sealing edge is to be formed.

35. The method of claim 32,
**characterized in that** said pretreatment consists in partial oxidation of the portions of the carbon materials of the electrode (3, 4) on which the sealing edge is to be formed.

## Revendications

1. Bloc d'électrodes à membrane (1) avec bordure étanche (5) intégrée pour une cellule de combustible comportant une membrane électrolytique en polymère (2), une anode (3) disposée sur l'une des surfaces de la membrane et une cathode (4) disposée sur l'autre surface de la membrane, **caractérisé en ce que** le bloc d'électrodes à membrane (1) présente une isolation de membrane (2), d'anode (3) et de cathode (4) affleurant contre les surfaces de contact de telle sorte que la membrane (2) est pour l'essentiel entièrement recouverte sur ses deux surfaces par les électrodes (3, 4) et qu'une bordure étanche (5) est prévue autour du bloc d'électrodes à membrane (1), laquelle pénètre une zone de bordure (6', 7') d'au moins une des électrodes (3, 4) de manière à ce que les pores d'au moins une électrode soient remplis, pour l'essentiel, dans la zone de bordure et que la zone de la membrane (2) qui est en contact avec la zone de bordure (6', 7') soit fixée contre les surfaces de contact de la membrane (2) et d'une électrode (3, 4) au moins.

2. Bloc d'électrodes à membrane (1) selon la revendication 1, **caractérisé en ce qu'**il comporte au moins une traversée (28) contre laquelle on prévoit, au moins dans une zone partielle, une bordure étanche (5')
- qui pénètre une zone de bordure (26', 27') d'au moins une des électrodes (3, 4) entourant la traversée de telle sorte que les pores d'au moins une électrode sont remplis, pour l'essentiel, dans la zone de bordure et qui est fixée contre la zone de la membrane (2) qui est en contact avec la zone de bordure (26', 27') et/ou
- qui est au moins fixée contre les surfaces de contact de la membrane (2).

3. Bloc d'électrodes à membrane (1) selon la revendication 1 ou 2, **caractérisé en ce qu'**il présente au moins une traversée (30) dans la bordure étanche (5) entourant le bloc d'électrodes à membrane.

4. Bloc d'électrodes à membrane (1) selon la revendication 3, **caractérisé en ce qu'**au moins un dispositif (31) est configuré relié à la traversée (30) pour amener un gaz réactif jusqu'à au moins une électrode ou un espace d'électrode.

5. Bloc d'électrodes à membrane (1) selon la revendication 4, **caractérisé en ce qu'**on prévoit au moins un dispositif (31) en forme de rainures sur une surface de la bordure étanche (5).

6. Bloc d'électrodes à membrane (1) selon l'une quelconque des revendications 1 à 5, **caractérisé en ce que** la bordure étanche (5) pénètre une zone de bordure (6') de l'anode (3) et est fixée contre la zone de la membrane (2) qui est en contact avec la zone de bordure (6').

7. Bloc d'électrodes à membrane (1) selon l'une quelconque des revendications 1 à 6, **caractérisé en ce que** la bordure étanche (5) est fixée contre les surfaces de contact de l'anode (3) au moins ainsi que contre les surfaces de contact de la membrane (2).

8. Bloc d'électrodes à membrane (1) selon l'une quelconque des revendications 1 à 7, **caractérisé en ce que** la bordure étanche (5, 5') isole la surface opposée à la membrane d'au moins une électrode (3, 4).

9. Bloc d'électrodes à membrane (1) selon l'une quelconque des revendications 1 à 7, **caractérisé en ce que** la bordure étanche (5, 5') fait saillie au-dessus de la surface opposée à la membrane d'au moins une électrode (3, 4).

10. Bloc d'électrodes à membrane (1) selon la revendication 9, **caractérisé en ce qu'**une encoche (29) est prévue dans la zone en saillie de la bordure étanche (5) pour recevoir de la colle.

11. Bloc d'électrodes à membrane (1) selon l'une quelconque des revendications 1 à 10, **caractérisé en ce que** la bordure étanche (5, 5') est en plastique ou contient du plastique.

12. Bloc d'électrodes à membrane (1) selon la revendication 11, **caractérisé en ce que** le plastique est un thermoplastique ou un plastique thermodurcissable qui est suffisamment fluide et peu visqueux à l'état fondu ou avant durcissement pour pouvoir pénétrer par effet capillaire dans les pores d'au moins une des électrodes (3, 4).

13. Bloc d'électrodes à membrane (1) selon la revendication 11, **caractérisé en ce que** le plastique est suffisamment fluide et peu visqueux à température ambiante ou à température accrue pour pouvoir pénétrer sous pression dans les pores d'au moins une des électrodes (3, 4).

14. Bloc d'électrodes à membrane (1) selon l'une quelconque des revendications 11 à 13, **caractérisé en ce que** le plastique est un polyéthylène, un polypropylène ou un polyamide.

15. Bloc d'électrodes à membrane (1) selon l'une quelconque des revendications 11 à 13, **caractérisé en ce que** le plastique est une résine époxy, une silicone ou une résine polyester.

16. Bloc d'électrodes à membrane (1) selon l'une quelconque des revendications 1 à 15, **caractérisé en ce que** la bordure étanche (5) de l'anode (3) au moins est collée à une plaque bipolaire (14, 15) de manière à être étanche à l'hydrogène.

17. Procédé de fabrication d'un bloc d'électrodes à membrane (1) avec bordure étanche (5) intégrée pour une cellule de combustible comportant une membrane électrolyte en polymère, présentant les étapes suivantes :
- préparation d'une couche électrodes-membrane fabriquée à partir d'une anode (3), d'une cathode (4) et d'une membrane électrolytique en polymère (2) disposée entre elles ;
- ablation d'un morceau de la couche de la taille appropriée pour fabriquer le bloc d'électrodes à membrane (1) souhaité, moyennant quoi le morceau enlevé présente une isolation de membrane(2), d'anode(3) et de cathode (4) affleurant contre les surfaces de contact de telle sorte que, dans le morceau enlevé, la membrane (2) est entièrement recouverte, pour l'essentiel, sur ses deux surfaces par les électrodes (3, 4) ;
- formation d'une bordure étanche (5) autour du morceau en diffusant un isolant dans la zone de bordure (6', 7) d'au moins une des électrodes (3, 4), moyennant quoi les pores d'au moins une électrode (3, 4) sont entièrement remplis, pour l'essentiel, dans la zone de bordure de manière à ce que la bordure étanche (5) pénètre une zone de bordure (6', 7') d'au moins une des électrodes (3, 4) et soit fixée contre la zone de la membrane (2) qui est en contact avec la zone de bordure (6', 7') ainsi qu'en amenant un isolant contre les surfaces de contact d'au moins une des électrodes (3, 4) ainsi que contre les surfaces de contact de la membrane (2) de manière à ce que la bordure étanche soit fixée contre les surfaces de contact de la membrane (2) et d'une électrode (3, 4) au moins.

18. Procédé selon la revendication 17, présentant en outre les étapes suivantes :
- formation d'une traversée (28) ; et
- formation d'une bordure étanche (5') contre une zone partielle au moins d'une zone de bordure (26', 27') entourant la traversée d'au moins une des électrodes (3, 4) ;
- diffusion d'un isolant dans la zone de bordure (26', 27') d'au moins une électrode (3, 4) moyennant quoi les pores d'au moins une électrode (3, 4) sont entièrement remplis, pour l'essentiel, dans la zone de bordure de telle sorte que la bordure étanche pénètre la zone de bordure et soit fixée contre la zone de la membrane (2) qui est en contact avec la zone de bordure ; et/ou
- apport d'un isolant contre les surfaces de contact de la membrane (2) au moins, de manière à ce que la bordure étanche soit au moins fixée contre les surfaces de contact de la membrane (2).

19. Procédé selon la revendication 17 ou 18, **caractérisé en ce qu'**au moins une traversée (30) est configurée dans la bordure étanche (5) entourant le bloc d'électrodes à membrane (1).

20. Procédé selon la revendication 19, **caractérisé en ce qu'**on configure au moins un dispositif (31) relié à la traversée (3) dans la bordure étanche (5) pour amener un gaz réactif jusqu'à une électrode au moins ou à un espace d'électrode.

21. Procédé selon la revendication 20, **caractérisé en ce qu'**on prévoit au moins un dispositif (31) en forme de rainures sur une surface de la bordure étanche (5).

22. Procédé selon l'une quelconque des revendications 17 à 21, **caractérisé en ce que** la bordure étanche (5, 5') est configurée en utilisant des thermoplastiques ou du plastique thermodurcissable.

23. Procédé selon la revendication 22, **caractérisé en ce que** le plastique utilisé est un polyéthylène, un polypropylène ou un polyamide.

24. Procédé selon la revendication 22, **caractérisé en ce que** le plastique utilisé est une résine époxy, une silicone ou une résine polyester.

25. Procédé selon l'une quelconque des revendications 22 à 24, **caractérisé en ce que** la bordure étanche (5, 5') est configurée en mettant du plastique sous forme fluide en contact avec une zone de bordure (6', 7', 26', 27') d'au moins une des électrodes (3, 4) et en le faisant consolider ou durcir.

26. Procédé selon l'une quelconque des revendications 22 à 25, **caractérisé en ce que** la bordure étanche (5') est configurée contre une traversée (28) en mettant du plastique sous forme fluide en contact avec les surfaces de contact de la membrane (2) au moins et en le faisant consolider ou durcir.

27. Procédé selon l'une quelconque des revendications 17 à 26, **caractérisé en ce que** la bordure étanche (5, 5') est configurée en appliquant de la pression et/ou une température accrue.

28. Procédé selon la revendication 27, **caractérisé en ce qu'**avant l'utilisation de la pression est évacué.

29. Procédé selon l'une quelconque des revendications 17 à 28, **caractérisé en ce que** la bordure étanche (5, 5') est configurée en diffusant l'isolant par effet capillaire dans la zone de bordure (6', 7') d'au moins une des électrodes (3, 4).

30. Procédé selon l'une quelconque des revendications 17 à 29, **caractérisé en ce que** la bordure étanche (5, 5') est configurée de telle sorte qu'elle isole la surface opposée à la membrane d'au moins une des électrodes (3, 4).

31. Procédé selon l'une quelconque des revendications 17 à 29, **caractérisé en ce que** la bordure étanche (5, 5') est configurée de telle sorte qu'elle fait saillie au-dessus de la surface opposée à la membrane d'au moins une des électrodes (3, 4).

32. Procédé selon l'une quelconque des revendications 17 à 31, **caractérisé en ce que** les zones des électrodes (3, 4) et/ou de la membrane (2) contre lesquelles la bordure étanche (5, 5') doit être configurée sont prétraitées, avant que la bordure étanche ne soit formée.

33. Procédé selon la revendication 32, **caractérisé en ce que** le prétraitement consiste à humidifier des zones de l'électrode (3, 4) contre lesquelles la bordure étanche doit être configurée avec un solvant de l'isolant.

34. Procédé selon la revendication 32, **caractérisé en ce que** le prétraitement consiste à fraiser des zones superficielles de l'électrode (3, 4) contre lesquelles la bordure étanche doit être configurée.

35. Procédé selon la revendication 32, **caractérisé en ce que** le prétraitement consiste en une oxydation partielle des zones en carbone de l'électrode (3, 4) contre lesquelles la bordure étanche doit être configurée.
